Europäisches Patentamt

European Patent Office

Office européen des brevets

(19)

(11) **EP 1 513 135 A1**

(12) **EUROPEAN PATENT APPLICATION**
published in accordance with Art. 158(3) EPC

(43) Date of publication:
**09.03.2005 Bulletin 2005/10**

(51) Int Cl.⁷: **G10L 11/02**

(21) Application number: **02738666.3**

(22) Date of filing: **12.06.2002**

(86) International application number:
**PCT/JP2002/005847**

(87) International publication number:
**WO 2003/107326 (24.12.2003 Gazette 2003/52)**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **MITSUBISHI DENKI KABUSHIKI
KAISHA
Tokyo 100-8310 (JP)**

(72) Inventor: **HANAZAWA, Toshiyuki,
c/o Mitsubishi Denki K.K.
Tokyo 100-8310 (JP)**

(74) Representative: **Pfenning, Meinig & Partner
Mozartstrasse 17
80336 München (DE)**

(54) **SPEECH RECOGNIZING METHOD AND DEVICE THEREOF**

(57)    A speech recognition method and apparatus therefor are provided for performing speech recognition in a start/finish point range and improving speech recognition abilities under noisy conditions.

The method comprises: an analysis step of performing acoustic analysis of input speech; a start/finish point range determining step of detecting, as hill segments, segments in which the power of the input speech continuously surpasses a predefined threshold value, and with the hill segment where the power is largest considered as the greatest hill segment, of assuming that a start-point range exists prior to the point at which the greatest hill segment goes below the threshold value and a finish-point range exists following the point at which the greatest hill segment goes above the threshold value, and of outputting combinations of start-point ranges and finish-point ranges; and an identification step of performing pattern matching between reference patterns and patterns of each of the combinations.

FIG. 1

**Description**

TECHNICAL FIELD

The present invention relates to a speech recognition method and apparatus therefor, to improve recognition performance under noisy conditions.

BACKGROUND ART

Speech recognition is performed by comparing the power of an input signal to a predefined threshold value and detecting, as a speech segment, a segment above the threshold value, and by carrying out pattern matching using predefined reference patterns.

Under noisy conditions, however, when the noise power level may surpass the threshold value, there have been problems in that speech segments are misdetected, leading to recognition errors. As a countermeasure, there is a recognition method, referred to as the start/finish point range method, in which the start and finish points of the speech segments are not uniquely determined, and pattern matching is performed over all segments from possible combinations of the start and finish points. After performing the pattern matching over all segments, however, problems of recognition errors arise due to partial matching, such as recognizing 'Higashi-Osaka' as 'Osaka'.

To reduce these problems, conventional technologies limit zones for the combinations of the start and finish points, that is, they limit the start/finish point range zones. One example of this technology is disclosed in Japanese Patent Laid-Open No.1988-300295.

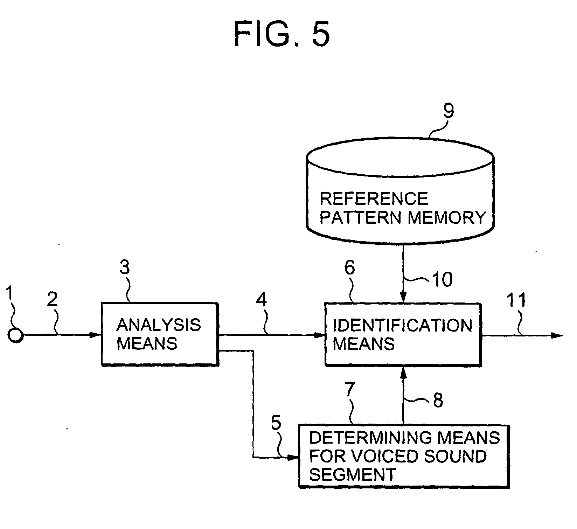

Fig.5 is a block diagram illustrating one configuration example of a speech recognition apparatus described in Japanese Patent Laid-Open No.1988-300295. The example explains cases where recognition of single words by a given speaker is carried out. When an input signal 2 is input from a signal input terminal 1, an analysis means 3 carries out A/D conversion of the input signal 2, divides it into short time segments known as frames, carries out acoustic analysis on each frame, and calculates and outputs for each frame a time series 4 for a feature vector $X(t)$ ($t = 1, 2, 3... T$), and a time series 5 for power $P(t)$ and zero-crossing counts $Z(t)$ ($t = 1, 2, 3... T$). Here, T is the total number of frames in the input signal 2. The feature vector $X(t)$ is, for example, an LPC cepstrum obtained by LPC analysis. The zero-crossing counts $Z(t)$ are used to detect voiced sound segments. That is, since in voiced sounds power is concentrated in low frequency components and the zero-crossing counts are low, as described below for this example, a segment where the speech power is above a predefined value and the zero-crossing counts are low is considered to be a voiced sound segment.

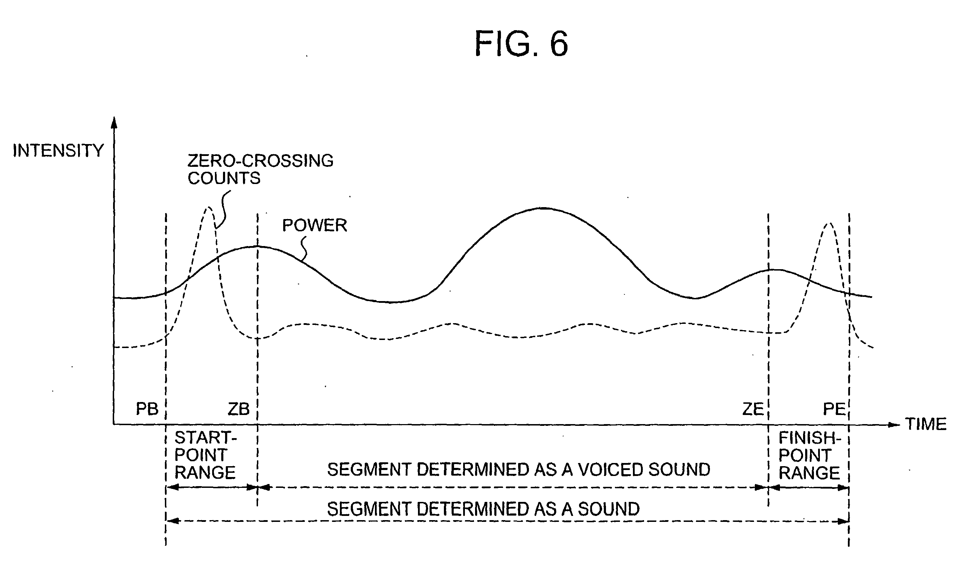

As illustrated in Fig. 6, with the input-signal time series 5 for the power $P(t)$ and the zero-crossing counts $Z(t)$ ($t = 1, 2, 3... T$) as input, a voiced sound determining means 7 detects as a speech segment start point PB a frame in which speech power surpasses a predefined threshold value, and detects as a speech segment finish point PE a frame in which the threshold value is not surpassed. Moreover, within the detected speech segment, it detects, as the start point ZB of the voiced sound segment, a frame in which the zero-crossing counts $Z(t)$ are below the threshold value, and as the finish point ZE of the voiced sound segment, a frame in which they are above the threshold value.

A segment from the start point PB of the speech segment to the start point ZB of the voiced sound segment is determined as a start-point range Bfree = {PB, ZB}. Here, PB is the head frame of the start-point range, and ZB is the final frame of the start-point range. Moreover, the segment from the finish point ZE of the voiced sound segment to the finish point PE of the speech segment is determined as a finish-point range Efree = {ZE, PE}. Here, ZE is the head frame of the finish-point range, and PE is the final frame of the finish-point range.

The voiced sound determining means 7 outputs the start-point range Bfree = {PB, ZB} and the finish-point range Efree = {ZE, PE} as start/finish point range information 8.

With the time series 4 for the feature vector, the start-point range Bfree = {PB, ZB}, and the finish-point range Efree = {ZE, PE}--being the start/finish point range information 8--as input, an identification means 11 performs pattern matching--for example DP matching, on the combinations of all the start and finish points within the start-point ranges and the finish-point ranges--with a reference pattern 10 stored in a reference pattern memory 9, and takes as the recognition result that which has the a minimum distance value. A time series for the feature vector for single words is stored in the reference pattern memory 9 as a reference pattern REF(i), (i =1, 2, 3... K) for single words that are predefined recognition objects. Here, K is the number of reference patterns. The feature vector $X(t)$ is, for example, an LPC (Linear Predictive Coding) cepstrum obtained by LPC analysis.

As described above, in the conventional technology it is assumed that correct speech-segment start and finish points exist between a detected speech segment and a voiced sound segment, and the start/finish point range is limited. However, there are various kinds of varying noise, and with noise in which power is concentrated in a low area of the spectrum, such as noise inside a vehicle, the zero-crossing counts are low, and thus, the risk of judging that there is a voiced sound segment is large. When the noise is judged to be voiced sound, pattern matching that includes the noise segment is carried out, and thus, recognition errors occur.

This invention is made to solve the above-described problems, and it has as an object the provision of a speech recognition apparatus that, not requiring judgment of voiced sound segments--which are difficult to judge accurately --effectively limits the start/finish point ranges and improves speech recognition accuracy.

DISCLOSURE OF THE INVENTION

According to a first aspect of the invention, a speech recognition method comprises: an analysis step of carrying out acoustic analysis of an input speech signal, and of outputting power in correspondence with the input signal; a start/finish point range determining step of detecting, as hill segments, segments in which the power continuously surpasses a predefined threshold value, with the hill segment where the power is largest considered to be the greatest hill segment, of assuming that a start-point range exists prior to the point at which the greatest hill segment goes below the threshold value and assuming that a finish-point range exists following the point at which the greatest hill segment goes above the threshold value, and of outputting combinations of start-point ranges and finish-point ranges; and an identification step of performing pattern matching between reference patterns and patterns defined by the combinations of the start-point ranges and the finish-point ranges.

According to a second aspect of the invention, in the identification step of the speech recognition method pattern, matching is performed between the reference patterns and each of the patterns defined by all the combinations of the start-point ranges and the finish-point ranges that are outputted in the start/finish point range.

According to a third aspect of the invention, in the start/finish point range determining step of the speech recognition method among the detected hill segments the hill segment in which the largest accumulated power is largest considered to be the greatest hill segment.

According to a fourth aspect of the invention, in the analysis step of the speech recognition method, the power is outputted by detection points, and in the start/finish point range determining step, among the detected hill segments, that hill segment in which the sum of a given number of the largest detection-point power values, from among the power values for each of the detection points, is largest, is considered to be the greatest hill segment.

According to a fifth aspect of the invention, in the start/finish point range determining step of the speech recognition method, the start-point range is assumed to exist in a hill segment prior to the greatest hill segment, near the point where the threshold value is surpassed, and the finish-point range is assumed to exist in a hill segment following the greatest hill segment, near the point where the threshold value is not surpassed.

According to a sixth aspect of the invention, in the start/finish point range determining step of the speech recognition method, a zone width in which the start-point range is assumed to exist and a zone width in which the finish-point range is assumed to exist are different for each hill segment.

According to a seventh aspect of the invention, in the analysis step of the speech recognition method, the power is outputted by frames, and in the start/finish point range determining step, a frame in which the power goes below the threshold value is considered to be the point at which the threshold value is gone below, and a frame in which the power surpasses the threshold value is considered to be the point at which the threshold value is surpassed.

According to an eighth aspect of the invention, a speech recognition apparatus comprises: an analysis means for carrying out acoustic analysis of an input speech signal, and for outputting power in correspondence with the input signal; a start/finish point range determining means for detecting, as hill segments, segments in which the power continuously surpasses a predefined threshold value, with the hill segment where the power is largest considered to be the greatest hill segment, for assuming that a start-point range exists prior to the point at which the greatest hill segment goes below the threshold value and assuming that a finish-point range exists following the point at which the greatest hill segment goes above the threshold value, and for outputting combinations of start-point ranges and finish-point ranges; and an identification means for performing pattern matching between reference patterns and patterns defined by the combinations of the start-point ranges and the finish-point ranges.

According to a ninth aspect of the invention, the identification means of the speech recognition apparatus performs pattern matching between the reference patterns and each of the patterns defined by all the combinations of the start-point ranges and the finish-point ranges that are outputted in the start/finish point ranges.

According to a tenth aspect of the invention, the start/finish point range determining means of the speech recognition apparatus considers, from among the detected hill segments, the hill segment in which accumulated power is largest to be the greatest hill segment.

According to a eleventh aspect of the invention, the analysis means of the speech recognition apparatus outputs the power in detection-point intervals, and the start/finish point range determining means considers, among the detected hill segments, that hill segment in which the sum of a given number of the largest detection-point power values, from among the power values for each of the detection points, is largest, to be the greatest hill segment.

According to a twelfth aspect of the invention, the start/finish point range determining means of the speech recognition apparatus assumes the start-point range exists in a hill segment prior to the greatest hill segment, near the point where the threshold value is surpassed, and assumes the finish-point range exists in a hill segment following the greatest hill segment, near the point where the threshold value is not surpassed.

According to a thirteenth aspect of the invention, the start/finish point range determining means of the speech recognition apparatus is configured such that a zone width in which the start-point range is assumed to exist and a zone width in which the finish-point range is assumed to exist are different for each hill segment.

According to a fourteenth aspect of the invention, the analysis means of the speech recognition apparatus outputs the power in frame intervals, and the start/finish point range determining means considers a frame in which the power goes below the threshold value to be the point at which the threshold value goes below, and a frame in which the power surpasses the threshold value to be the point at which the threshold value surpasses.

BRIEF DESCRIPTION OF DRAWINGS

Fig. 1 is a configuration diagram of a speech recognition apparatus according to Embodiment 1 and Embodiment 2 of the present invention;

Fig. 2 is a diagram explaining a method for determining a start-point range and a finish-point range in Embodiment 1 of the present invention;

Fig. 3 is a diagram explaining a method for determining a start-point range and a finish-point range in Embodiment 2 of the present invention;

Fig. 4 is a diagram explaining a method for determining a start-point range and a finish-point range in Embodiment 2 of the present invention;

Fig. 5 is a configuration diagram of a speech recognition apparatus according to conventional technologies; and

Fig. 6 is a diagram explaining a method for determining a start-point range and a finish-point range according to conventional technologies.

BEST MODE FOR CARRYING OUT THE INVENTION

Embodiment 1.

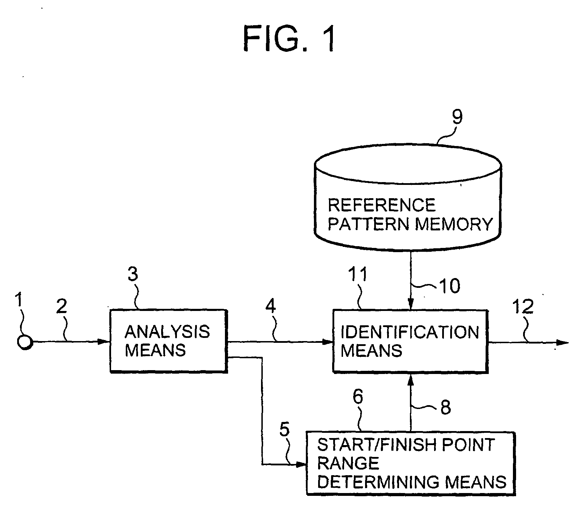

Fig. 1 is a block diagram illustrating a configuration of a speech recognition apparatus according to Embodiment 1 of the present invention. In the figure, reference 1 denotes an input-signal terminal for inputting a signal, reference 2 denotes an input signal inputted by the input-signal terminal 1, reference 3 denotes an analysis means for carrying out acoustic analysis of the input signal 2, reference 4 denotes a time series for an input-signal feature vector calculated by the analysis means 3, reference 5 denotes a time series for the input-signal power calculated by the analysis means 3, reference 6 denotes a start/finish point range determining means for determining a start/finish point range based on the time series 5 of the input-signal power, reference 8 denotes start/finish point range information outputted by the start/finish point range determining means 6, reference 9 denotes a reference pattern memory that memorizes a reference pattern used in identification processing of the speech recognition, reference 10 denotes the reference pattern used in identification processing of the speech recognition, and reference 11 denotes an identification means for carrying out pattern matching with the reference pattern for each word.

In the present embodiment, recognition of single words by a given speaker is explained. In the reference pattern memory 9, the feature vector time series for each word is stored as a reference pattern REF(i), (i = 1, 2, 3... K) for every word that is set in advance to be an object for recognition. Here, K is the number of reference patterns. The feature vector X(t) is, for example, an LPC cepstrum obtained by LPC analysis.

Operations are now explained. When the input signal 2 is inputted from the input-signal terminal 1, the analysis means 3 carries out an A/D conversion of the input signal 2, and after that, for each short time segment, divides the converted signal into units referred to as frames. The analysis means then carries out acoustic analysis on each frame, and calculates and outputs the time series 4 for the feature vector X(t) (t = 1, 2, 3... T) of the frame, and the time series 5 for the power P(t) (t = 1, 2, 3... T). Here, T is the total number of frames in the input signal 2. The feature vector X(t) is, for example, an LPC (linear predictive coding) cepstrum obtained by LPC analysis. The power P(t) can be obtained, for example, by calculating the sum of the squares of the digital values of the input signal within a frame, and computing its logarithm.

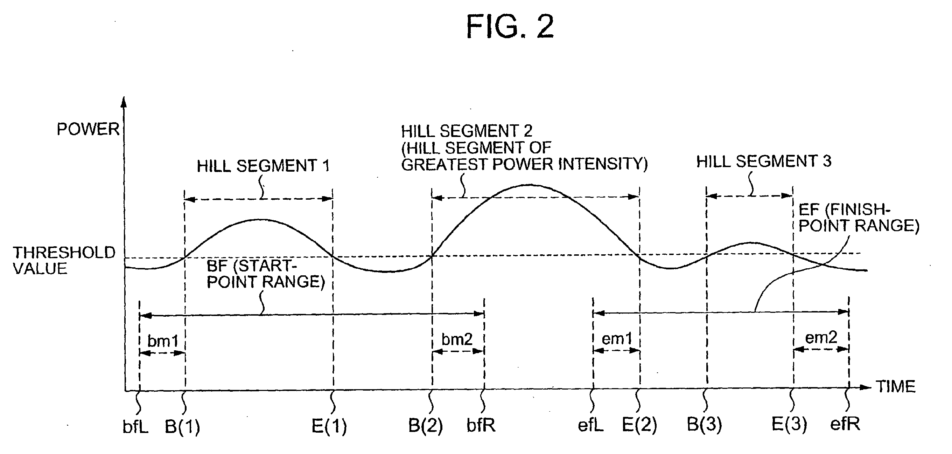

As illustrated in Fig. 2, with the power P(t) (t = 1, 2, 3... T) of the input signal as input, the start/finish point range determining means 6 detects, as a hill segment H(i) = {B(i), E (i)} (i = 1, 2, 3... N), a segment in which the number of continuous frames whose power surpasses a predefined threshold value, is equal to or surpasses a given number. Here, B(i) is the start point of the hill segment, that is, the frame in which the power surpasses the threshold value. E (i) is the finish point of the hill segment, that is, the frame in which the power is less than the threshold value. N is the number of detected hill segments. In the example in Fig. 2, N = 3.

Next, the start/finish point range determining means 6 calculates, by equation (2) or (2), the power intensity PK(i) (i = 1, 2, 3... N) of each hill segment PH(i) = {B(i), E(i)} (i = 1, 2, 3... N), and detects as the greatest power intensity hill segment PH (I), the hill in which the power intensity is largest, according to equation (3). In equation (2), t(i, j) is the frame in which the power is the j-th largest among the frames within each hill segment PH(i) = {B(i), E(i)}. Therefore, t(i, 1) is the frame in which the power is greatest within the hill segment PH(i). In this manner, equation (2) enables power intensities to be calculated using the largest M power values within each hill segment. Meanwhile, for each hill segment, equation (1) calculates the power intensity as the sum of all the power within the segment. As to whether equations (1) or (2) should be used, selection is made according to the kind of environment noise expected and the speech that is the object of recognition at the time of use of the speech recognition apparatus.

$$PK(i) = \sum_{t=B(i)}^{t=E(i)} P(t), \qquad (i=1, 2, 3 \dots N) \tag{1}$$

$$PK(i) = \sum_{j=1}^{M} P(t(i, j)), \qquad (i=1, 2, 3 \dots N) \tag{2}$$

$$I = argmax(i)PK(i) \tag{3}$$

The present embodiment assumes that the hill segment in which the power intensity is greatest is that of the speech. For example, when the duration of the power hill is short but the momentary signal power is large, yielding a spike-shaped noise curve, equation (1) is used; conversely, when the duration of the power hill is long but the noise power in each frame is not large, equation (2) is used. In this manner, the noise segment does not become the hill segment where power intensity is greatest.

Next, the start/finish point range determining means 6, using equations (4) and (5), determines as the start-point range BF = {bfL, bfR}, a segment from the first hill segment start point B(1) to the start point B(I) of the greatest power intensity hill segment to which are added the start-point margins bm1 and bm2. Here, bfL is the head frame of the start-point range, bfR is the final frame of the start-point range, and the start-point margins bm1 and bm2 are predefined constants greater than or equal to zero.

$$bfL = B(I) - bm1 \tag{4}$$

$$bfR = B(I) + bm2 \tag{5}$$

Next, using equations (6) and (7), the start/finish point range determining means 6 determines as the finish-point range EF = {efL, efR}, a segment from the finish point E(N) of the final hill segment to the final point E (I) of the greatest power intensity hill segment, to which are added the finish-point margins em1 and em2. Here, efL is the head frame of the finish-point range and efR is the final frame of the finish-point range. The finish-point margins em1 and em2 are predefined constants greater than or equal to zero. Fig. 2 illustrates the start-point range BF and the finish-point range EF determined by the above-described process.

$$efL = E(I) - em1 \tag{6}$$

$$efR = E(N) + bm2 \tag{7}$$

The start/finish point range determining means 6 outputs the start-point range BF = {bfL, bfR} and the finish-point range EF = {efL, efR} as the start/finish point range information 8.

With input of the time series 4 for the feature vector, and the start-point range BF = {bfL, bfR} and the finish-point range EF = {efL, efR}--being the start/finish point range information 8--as input, the identification means 11 performs pattern matching on combinations of all start and finish points within the start-point ranges and finish-point ranges with REF(i), a reference pattern 10 for each word stored in a reference pattern memory 9. This process is carried out sequentially for all the reference patterns REF(i) (i = 1, 2, 3... K) and, based on the results of verifying all combinations of start and finish points with the reference pattern, the reference pattern with the least difference is outputted as a recognition result 12. DP matching, for example, may be used as a pattern matching method.

In the present embodiment, as explained above, with regard to noisy conditions, assuming that 'the greatest power intensity hill is not background noise, but is speech or a part of speech, being the objects for recognition' , the start/finish point ranges are restricted by the following:

(1) within the greatest power intensity hill segment, the start/finish point range is not set beyond the start-point margin bm2 and the finish-point margin em1; and
(2) start/finish point ranges do not straddle the greatest power intensity hill, that is, the start-point range is not included after the greatest power intensity hill, and the finish-point range is not included before the greatest power intensity hill.

Clearly, under noisy conditions the human voice becomes louder, and thus, the above assumption is valid under most noisy conditions. Based on this assumption, the speech recognition apparatus of the present embodiment does not require judgment of voiced sound segments, which are difficult to judge accurately. Moreover, by efficiently restricting as much as possible the inclusion of the start/finish point ranges within the speech, recognition errors due to partial matching can be decreased.

While the present embodiment uses DP matching as the pattern matching method, similar results can be obtained with other pattern matching methods such as HMM (Hidden Markov Models). Moreover, similar results can also be obtained with continuous speech recognition and single word recognition or with continuous speech of an unspecified speaker.

Embodiment 2.

Next, the speech recognition apparatus related to another embodiment of the present invention is explained. In the speech recognition apparatus of this embodiment, the operation of the start/finish point range determining means 6 is modified as follows. With the input-signal power P(t) (t = 1, 2, 3... T) as input, first the start/finish point range determining means 6 detects, by an operation similar to that of embodiment 1, hill segments PH(i) = {B(i), E(i)}(i = 1, 2, 3... N) in which the number of continuous frames whose power surpasses a predefined threshold value is equal to or surpasses a given number, and also detects the hill segment of largest power intensity PH(I). Next, segments comprising the start-point margins bm1 and bm2 before and after the start points B(i), (i = 1, 2, 3... N) of the hill segment of largest power intensity PH(I) and of each hill segment preceding it are made the start-point ranges BF(i) = {bfL(i), bfR(i)} (i = 1, 2... I). Here, bfL(i) is the head frame of the i-th start-point range and is obtained from equation (8); bfR(i) is the final frame of the i-th start-point range and is obtained from equation (9). The start-point margins bmL(i) and bmR(i) are predefined constants greater than or equal to zero.

$$bfL(i) = B(i) - bmL(i), \ (i = 1, 2, 3... N) \tag{8}$$

$$bfR(i) = B(i) + bmR(i), \ (i = 1, 2, 3 ... N) \tag{9}$$

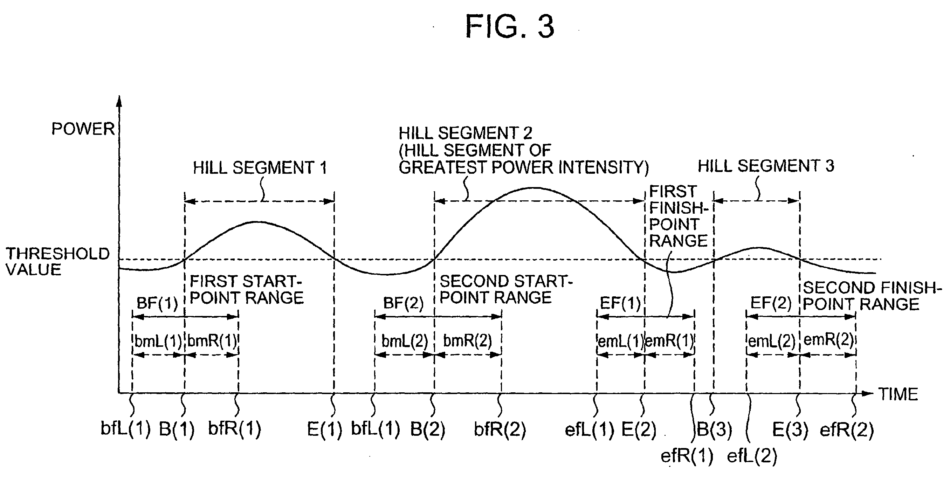

Next, according to equations (10) and (11), segments comprising the finish-point margins em1 and em2 before and after the finish points E(i) , (i = 1, 1+1... N) of the hill segment of largest power intensity PH(I) and of each hill segment following it are made the finish-point ranges EF(i) = {efL(i), efR(i)} (i = 1, 2... N-I+1). Here, efL(i) is the head frame of i-th finish-point range and efR(i) is the final frame of i-th finish-point range. The finish-point margins emL(i) and emR(i) are predefined constants greater than or equal to zero. The start-point ranges and the finish-point ranges, determined according to the above processing, are illustrated in Fig. 3.

$$efL(i) = E(I-1+i) - emL(i), \ (i = 1, 2, 3... N-I+1) \tag{10}$$

$$efR(i) = E(I-1+i) + emR(i), \ (i = 1, 2, 3... N-I+1) \tag{11}$$

Furthermore, the start-point margins bmL(i) and bmR(i) may be set to different values for each start-point range BF(i) or may be set to common values.

Enlarging the start-point ranges results in a trade-off relationship: while robustness is provided against errors in the detection of the start-points, the risk of partial matching increases. The margin bmL(1) on the left side of the first start-point range BF(1) is the range at the outer point of the range of speech, and thus, even when the value increases, the risk of partial matching does not significantly increase. However, it is possible that the right side of the first start-point range BF(1), as well as the second and subsequent start-point ranges, are within the speech segment, and by setting the start-point margins bmL(i) and bmR(i) to large values, the possibility of partial matching increases.

Thus, if the start-point margins at both the left and right sides of the second or subsequent start-point ranges and the start-point margin at the right side of the first start-point range are smaller in value than the start-point margin at the left side of the first or subsequent start-point range, or are zero, the inner range becomes small or zero, and the risk of partial matching is curtailed.

In addition, the finish-point margins emL(i) and emR(i) may be set to different values for each finish-point range EF(i) or may be set to common values.

Similarly, the right side efR(N-I+1) of the margin of the final finish-point range EF(N-I+1) is the outer point of the speech, and thus, even if the value is increased, the risk of partial matching does not significantly increase. However, it is possible that the left side of the final finish-point range and the finish-point ranges (excepting the final one) may be within the speech segment, and so by setting the finish-point margins emL(i) and emR(i) to large values, the possibility of partial matching increases.

Therefore, when the finish-point margins at both left and right sides of the finish-point range (excepting the final one) and the left side of the final finish-point range are smaller in value than the margin at the right side of the final finish-point range or are zero, the ranges on the inside become small or zero, and the risk of partial matching is curtailed.

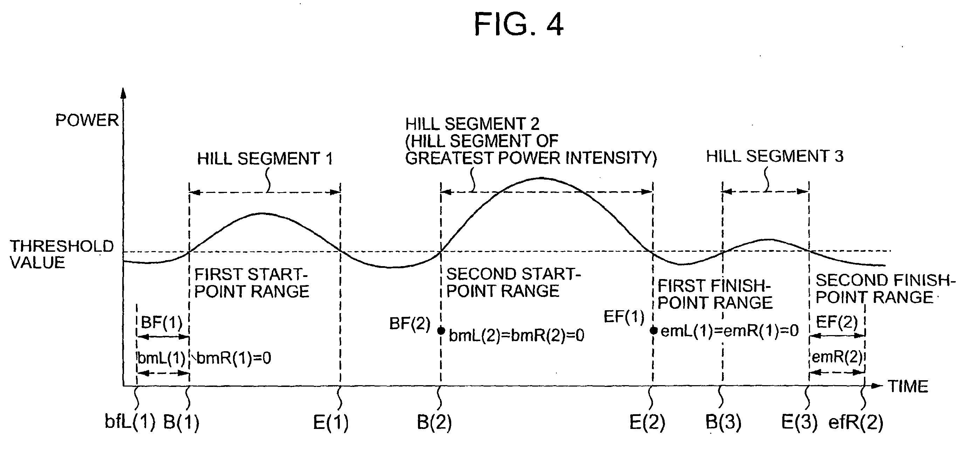

Fig.4 illustrates a case where the start-point margin of both the left and right sides of the second or greater start-point ranges and the start-point margin of the right side of the first start-point range are zero; moreover, the finish-point margin of both left and right sides of the finish-point ranges (excepting the final one) and the finish-point margin of the left side of the final finish-point range are zero.

With the time series 4 for the feature vector, and the start-point range BF(i) = {bfL(i), bfR(i)} (i = 1, 2... I), and the finish-point range EF(i)={efL(i), efR(i)} (i = 1, 2... N-I+1)--being the start/finish point range information 8--as input, an identification means 11 performs pattern matching on the combinations of all start and finish ranges within the start-point ranges and finish-point ranges with REF(i), a reference pattern 10 for each word stored in a reference pattern memory 9. This process is carried out sequentially for all the reference patterns REF(i) (i = 1, 2, 3... K), and the reference pattern with the least difference is outputted as the recognition result 12. DP matching, for example, may be used as the pattern matching.

Under real conditions of varying noise, given that the rise and fall of the power hills are often observed at the start and finish points of speech, according to the speech recognition apparatus related to the present embodiment and in addition to the restrictions on the start/finish point range explained in Embodiment 1, by restricting the start-point range to the segments before and after the rise in the power hill and by restricting the finish-point ranges to the segments before and after the endpoints of the power hills, recognition errors due to partial matching can be further decreased.

INDUSTRIAL APPLICABILITY

The present invention, configured as described above, does not require judgment of voiced sound segments, which are difficult to judge accurately. By efficiently restricting as much as possible the inclusion of the start/finish point ranges within the speech portions, recognition errors due to partial matching can be decreased.

With the present invention, configured as described above, it is possible to select from among all combinations of start and finish points a start and finish point combination having the minimum difference from the reference pattern.

Moreover, with the present invention, configured as described above, it is possible to efficiently perform speech recognition in an environment in which the power hills continue for only a short time, but the momentary signal power is large, with a spike-shaped noise curve occurring.

Likewise, with the present invention, configured as described above, it is possible to efficiently perform speech recognition in an environment in which the power hills continue for a long time, but noise where the maximum power value is not large may occur.

Further, with the present invention, configured as described above, it is possible to reduce errors in the detection of the start and finish points.

It is also possible to control the partial matching risks while reducing errors in the detection of the start and finish points.

Moreover, the present invention, configured as described above, can be applied to speech recognition apparatuses that carry out acoustic analysis per frame unit.

**Claims**

1.  A speech recognition method comprising:

    an analysis step of carrying out acoustic analysis of an input speech signal, and of outputting power in correspondence with the input signal;
    a start/finish point range determining step of detecting, as hill segments, segments in which the power continuously surpasses a predefined threshold value, with the hill segment where the power is largest considered to be the greatest hill segment, of assuming that a start-point range exists prior to the point at which the greatest hill segment goes below the threshold value and assuming that a finish-point range exists following the point at which the greatest hill segment goes above the threshold value, and of outputting combinations of start-point ranges and finish-point ranges; and
    an identification step of performing pattern matching between reference patterns and patterns defined by the combinations of the start-point ranges and the finish-point ranges.

2.  A speech recognition method according to claim 1,
    wherein, in the start/finish point range determining step, a plurality of combinations of the start-point ranges and the finish-point ranges are outputted, and in the identification step, pattern matching is performed between the reference patterns and each of the patterns defined by all the combinations of the start-point ranges and the finish-point ranges that are outputted in the start/finish point range determining step.

3.  A speech recognition method according to claim 1,
    wherein, in the start/finish point range determining step, among the detected hill segments the hill segment in which accumulated power is largest is considered to be the greatest hill segment.

4.  A speech recognition method according to claim 1
    wherein, in the analysis step, the power is outputted by detection points, and in the start/finish point range determining step, among the detected hill segments, that hill segment in which the sum of a given number of the largest detection-point power values, from among the power values for each of the detection points, is largest, is considered to be the greatest hill segment.

5.  A speech recognition method according to claim 1,
    wherein, in the start/finish point range determining step, the start-point range is assumed to exist in a hill segment prior to the greatest hill segment, near the point where the threshold value is surpassed, and the finish-point range is assumed to exist in a hill segment following the greatest hill segment, near the point where the threshold value is not surpassed.

6.  A speech recognition method according to claim 1,
    wherein, in the start/finish point range determining step, a zone width in which the start-point range is assumed to exist and a zone width in which the finish-point range is assumed to exist are different for each hill segment.

7.  A speech recognition method according to claim 1,
    wherein, in the analysis step, the power is outputted by frames, and in the start/finish point range determining step, a frame in which the power goes below the threshold value is considered to be the point at which the threshold value is gone below, and a frame in which the power surpasses the threshold value is considered to be the point at which the threshold value is surpassed.

8.  A speech recognition apparatus comprising:

    an analysis means for carrying out acoustic analysis of an input speech signal, and for outputting power in correspondence with the input signal;
    a start/finish point range determining means for detecting as hill segments, segments in which the power continuously surpasses a predefined threshold value, with the hill segment where the power is largest considered to be the greatest hill segment, for assuming that a start-point range exists prior to the point at which the greatest hill segment is below the threshold value and assuming that a finish-point range exists following the point at which the greatest hill segment is above the threshold value, and for outputting combinations of start-point ranges and finish-point ranges ; and

an identification means for performing pattern matching between reference patterns and patterns defined by the combinations of the start-point ranges and the finish-point ranges.

9. A speech recognition apparatus according to claim 8, wherein the start/finish point range determining means outputs a plurality of combinations of the start-point ranges and the finish-point ranges, and the identification means performs pattern matching between the reference patterns and each of the patterns defined by all the combinations of the start-point ranges and the finish-point ranges that the start/finish point range determining means outputs.

10. A speech recognition apparatus according to claim 8, wherein the start/finish point range determining means considers, from among the detected hill segments the hill segment in which accumulated power is largest to be the greatest hill segment.

11. A speech recognition apparatus according to claim 8, wherein the analysis means outputs the power in detection-points intervals, and the start/finish point range determining means considers, among the detected hill segments, that hill segment in which the sum of a given number of the largest detection-point power values, from among the power values for each of the detection points, is largest, to be the greatest hill segment.

12. A speech recognition apparatus according to claim 8, wherein the start/finish point range determining means assumes the start-point range exists in a hill segment prior to the greatest hill segment, near the point where the threshold value is surpassed, and assumes the finish-point range exists in a hill segment following the greatest hill segment, near the point where the threshold value is not surpassed.

13. A speech recognition apparatus according to claim 8, wherein the start/finish point range determining means is configured such that a zone width in which the start-point range is assumed to exist and a zone width in which the finish-point range is assumed to exist are different for each hill segment.

14. A speech recognition apparatus according to claim 8, wherein the analysis means outputs the power in frame intervals, and the start/finish point range determining means considers a frame in which the power goes below the threshold value to be the point below the threshold value, and a frame in which the power surpasses the threshold value to be the point at which the threshold value surpasses.

EP 1 513 135 A1

# FIG. 1

# FIG. 2

EP 1 513 135 A1

# FIG. 3

POWER

HILL SEGMENT 1

HILL SEGMENT 2
(HILL SEGMENT OF
GREATEST POWER INTENSITY)

HILL SEGMENT 3

FIRST
FINISH-
POINT
RANGE

THRESHOLD
VALUE

FIRST START-
POINT RANGE

SECOND START-
POINT RANGE

EF(1)

EF(2)

SECOND FINISH-
POINT RANGE

BF(1)

BF(2)

bmL(1) bmR(1)

bmL(2) bmR(2)

emL(1) emR(1)

emL(2) emR(2)

TIME

bfL(1) B(1) bfR(1)    E(1) bfL(1) B(2)   bfR(2)    efL(1) E(2)   B(3)   E(3) efR(2)

efR(1) efL(2)

EP 1 513 135 A1

# FIG. 4

POWER

HILL SEGMENT 2
(HILL SEGMENT OF
GREATEST POWER INTENSITY)

HILL SEGMENT 1

HILL SEGMENT 3

THRESHOLD
VALUE

FIRST START-
POINT RANGE

SECOND START-
POINT RANGE

FIRST FINISH-
POINT RANGE

SECOND FINISH-
POINT RANGE

BF(1)

BF(2) ● bmL(2)=bmR(2)=0

EF(1) ● emL(1)=emR(1)=0

EF(2)

bmL(1) bmR(1)=0

emR(2)

TIME

bfL(1) B(1)    E(1)    B(2)    E(2)    B(3)    E(3) efR(2)

EP 1 513 135 A1

# FIG. 5

ANALYSIS
MEANS

REFERENCE
PATTERN MEMORY

IDENTIFICATION
MEANS

DETERMINING MEANS
FOR VOICED SOUND
SEGMENT

# FIG. 6

INTENSITY

ZERO-CROSSING
COUNTS

POWER

PB    ZB    ZE    PE

TIME

START-POINT RANGE

SEGMENT DETERMINED AS A VOICED SOUND

FINISH-POINT RANGE

SEGMENT DETERMINED AS A SOUND

EP 1 513 135 A1

## INTERNATIONAL SEARCH REPORT

| | International application No. |
|---|---|
| | PCT/JP02/05847 |

**A. CLASSIFICATION OF SUBJECT MATTER**
Int.Cl$^7$ G10L11/02

According to International Patent Classification (IPC) or to both national classification and IPC

**B. FIELDS SEARCHED**

Minimum documentation searched (classification system followed by classification symbols)
Int.Cl$^7$ G10L11/00-11/02

Documentation searched other than minimum documentation to the extent that such documents are included in the fields searched

| | | | |
|---|---|---|---|
| Jitsuyo Shinan Koho | 1926-1995 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)
JICST FILE(JOIS)

**C. DOCUMENTS CONSIDERED TO BE RELEVANT**

| Category* | Citation of document, with indication, where appropriate, of the relevant passages | Relevant to claim No. |
|---|---|---|
| Y | EP 237934 A (Kabushiki Kaisha Toshiba), 23 September, 1987 (23.09.87), Full text; all drawings & US 4881266 A & DE 3775797 C & JP 6-105394 B | 1,2,5,7, 8,9,12,14 |
| Y | JP 2-93696 A (Sanyo Electric Co., Ltd.), 04 April, 1990 (04.04.90), Full text; all drawings (Family: none) | 1,2,5,7, 8,9,12,14 |
| A | | 6,13 |
| A | JP 61-143800 A (Toshiba Corp.), 01 July, 1986 (01.07.86), Full text; all drawings (Family: none) | 1-14 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 July, 2002 (05.07.02) | 16 July, 2002 (16.07.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.

PCT/JP02/05847

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2000-250565 A (Ricoh Co., Ltd.), 14 September, 2000 (14.09.00), Full text; all drawings (Family: none) | 3,4,10,11 |
| A | JP 8-292787 A (Sanyo Electric Co., Ltd.), 05 November, 1996 (05.11.96), Par. Nos. [0084] to [0111]; Figs. 9 to 11 (Family: none) | 3,4,10,11 |

Form PCT/ISA/210 (continuation of second sheet) (July 1998)